# EUROPÄISCHE PATENTANMELDUNG

(11) **EP 1 294 200 A2**
(43) Veröffentlichungstag der Anmeldung: **19.03.2003**
(21) Anmeldenummer: 02018393.5
(22) Anmeldetag: 14.08.2002
(51) Int. Cl.: H04Q 3/00, H04M 7/00

(54) **Verfahren und Anordnung zur Vermittlung einer Verbindung**

(30) Priorität: 17.09.2001 DE 10145758
(71) Anmelder: SIEMENS AKTIENGESELLSCHAFT, 80333 München (DE)
(72) Erfinder: Huffschmid, Norbert, 82110 Germering (DE)

(57) **Zusammenfassung**

Verfahren zur Vermittlung einer Verbindung zwischen einem ersten und zweiten Endgerät (170, 170') eines Kommunikationsnetzes, wobei die Vermittlung auf Anforderung von außerhalb dieses Kommunikationsnetzes erfolgt, mit folgenden Schritten: a) Verbinden zweier zeitschlitzgesteuerter Eingänge (110, 110') für Übertragungsstrecken (141, 141') eines Media-Gateways (100) durch eine Datenleitung (120); b) Senden einer CtD-Verbindungsanforderung von einem CtD-Server (130) an das Media-Gateway (100), welche die Nutzung der miteinander verbundenen Eingänge (110, 110') zur Übertragung von Signalen in einem gemeinsamen Zeitschlitz bewirkt; c) Aufbauen einer Verbindung zwischen dem einen Eingang (110) und dem ersten Endgerät (170), sowie einer Verbindung zwischen dem anderen Eingang (110') und dem zweiten Endgerät (170'); und d) Zusammenschalten beider Verbindungen zu einer Übertragungsstrecke.

## Beschreibung

Die vorliegende Erfindung betrifft ein Verfahren zur Vermittlung einer Verbindung zwischen zwei Endgeräten eines Kommunikationsnetzes nach dem Oberbegriff des Anspruchs 1 und eine Anordnung zur Durchführung des Verfahrens nach dem Oberbegriff des Anspruchs 5.

Bekannt ist, eine Verbindung zwischen zwei Teilnehmern eines Kommunikationsnetzes zu initiieren, indem von einem außerhalb des Kommunikationsnetzes befindlichen speziellen Endgerät, z. B. einem Computer als Automatic Operator, beide Teilnehmer jeweils getrennt gerufen werden. Sobald eine Verbindung zu beiden Teilnehmern und dem speziellen Endgerät besteht, werden dann durch dieses Endgerät die Nutzsignale und die Steuersignale für eventuelle Diensterkennungen von einer Verbindung zu anderen übertragen. Ein solches Vermittlungsverfahren wird in Telefonnetzen bei Call-Centern angewandt. Nachteilig ist die relativ aufwendige Realisierung und die nötige hohe Leistungskapazität des die Verbindung aufbauenden Endgerätes.

Von besonderem Interesse ist eine solche Vermittlung einer Verbindung in Telefonnetzen für die Funktion des "Click-to-Dial" (CtD) aus dem Internet heraus. Unter "Click-to-Dial" versteht man ein Internetfeature, mit dem es einem Websurfer möglich ist, per Mausklick eine Telefonverbindung zwischen zwei Teilnehmern (Endgeräten) zu initiieren. Ein Teilnehmer ist im Normalfall der Websurfer selbst, der andere Teilnehmer kann ein beliebiger anderer Teilnehmer, vorzugsweise aber ein Mitarbeiter des Beratungs- oder Serviceteams eines Produktoder Dienstleistungsanbieters im Internet sein.

Dabei stellt das "Click-to-Dial", z. B. durch die Anbringung eines entsprechenden Push-Buttons auf der Webside eines Anbieters, zur Klärung detaillierter Kundenanfragen durch einfachen und schnellen Zugriff auf telefonische Beratungskompetenz einen nicht unerheblichen Wettbewerbsvorteil dar. Bei einem herkömmlichen Verbindungsaufbau sind zunächst eine Ursprungs-, eine Ziel- und gegebenenfalls mehrere Transit-Vermittlungsstellen beteiligt. Bei einem "Click-to-Dial"-Anruf hingegen gibt es keine Ursprungs-Vermittlungsstellen. Stattdessen werden zwei zunächst unabhängige Verbindungen aufgebaut und anschließend zusammengeschaltet.

Wird diese Funktion ähnlich der Gesprächsvermittlung in Call-Centern verwirklicht, so müssen auch hier von einem als Endgerät des Kommunikationsnetzes arbeitenden Controller zwei Verbindungen über das Kommunikationsnetz initiiert werden, und sobald die Verbindungen beide bestehen, von dem Controller die Nutzdaten (die digitalisierte Sprache oder sonstige zu übertragende Daten) der einen Verbindung über die andere weitergeleitet werden und umgekehrt.

Dazu existieren bereits mehrere Lösungsvarianten: z. B. wurde zur Realisierung des Features "Click-to-Dial" u. a. an dem Elektronischen Wählsystem Digital (EWSD) der Firma Siemens, das in der DE 199 46 658 A1 beschrieben ist, ein entsprechender Hardware-Loop eingerichtet, welcher diese Funktionalität unterstützt. Dabei werden in einem Kommunikationsnetz mit von den Nutzkanälen unabhängigen zentralem Zeichenkanal zwei Eingänge für Übertragungsstrecken an einer Transitvermittlungsstelle durch eine Datenleitung verbunden. Eine Steuervorrichtung bewirkt durch ein Steuersignal auf dem zentralen Zeichenkanal, daß eine Verbindung von dem einen Eingang zum ersten Teilnehmer und vom zweiten Eingang zum zweiten Teilnehmer weitervermittelt wird. Die Endgerätesignalisierungen der Verbindungen zu den Teilnehmern werden wechselseitig übertragen.

Auch in Verbindung mit anderen Hardwarekomponenten wurden entsprechende Lösungen realisiert (z. B. EWSD V14-LM 40166 oder SURPASS Open Service-Plattform mittels ISL und IN-CPH).

Alle diese Lösungsansätze zielen aber darauf ab, den erforderlichen Verbindungsaufbau in EWSD mittels ISUP-Signalisierung (ISDN User Part-Signalisierung) zu initiieren sowie die Sprechwegdurchschaltung innerhalb von EWSD zu steuern. Dies bedeutet in jedem Fall einen erhöhten Entwicklungs- und Realisierungsaufwand für zusätzliche Hardwarekomponenten, welche in schon bestehende Kommunikationshardware nachzurüsten wäre bzw. diese zu ersetzen hätte. Dies würde von einem Netzbetreiber jedoch erhebliche Investitionen erfordern.

Es ist deshalb Aufgabe der vorliegenden Erfindung, ein Verfahren und eine Anordnung bereitzustellen, welche "Click-to-Dial"-Verbindungen einfach und kostengünstig auf Basis schon vorhandener Kommunikationshardware, insbesondere auf Basis eines entsprechenden Media-Gateways, ermöglichen.

Diese Aufgabe wird verfahrensseitig durch ein Verfahren zur Vermittlung einer Verbindung zwischen zwei Endgeräten eines Kommunikationsnetzes mit den Verfahrensschritten des Anspruchs 1 und vorrichtungsseitig durch eine Anordnung nach Anspruch 5 gelöst.

Dabei werden in einem ersten Schritt zunächst zwei zeitschlitzgesteuerte Eingänge für Übertragungsstrecken, insbesondere für Voice-over-IP-(VoIP)-Übertragungsstrecken, eines Media-Gateways durch eine Datenleitung miteinander verbunden. Das hier vorzugsweise verwendete VoIP-Media-Gateway hiG700 realisiert dabei die Zusammenarbeit zwischen den an DSP(Digital Signal Processing)-Karten angeschlossenen TDM(Time Division Multiplex)-Trunks und dem IP-Netzwerk (Internet Protocol-Netzwerk). Die DSP-Karten sind im normalen Einsatz über die Ports der TDM-Trunks zur Anbindung an externe Vermittlungsstellen bzw. Nebenstellenanlagen verbunden.

In einem weiteren Schritt wird eine CtD-Verbindungsanforderung von einem CtD-Server an das Media-Gateway gesandt, welche die Nutzung der miteinander verbundenen Eingänge zur Übertragung von Signalen in einem gemeinsamen Zeitschlitz bewirkt. Damit ist die Synchronisation der paarweise durch eine Datenleitung verbundenen Eingänge im gleichen Zeitschlitz gewährleistet, wodurch die so miteinander verbundenen Sprechwege im Media-Gateway dauerhaft durchgeschaltet sind. Die Administration einer solchen Durchschaltung erfolgt genau so, als ob ein entsprechender Media-Gateway-Controller zur Signalisierung ankommender VoIP-Verbindungen vorhanden wäre.

In einem weiteren Schritt wird dann eine Verbindung zwischen dem einen Eingang und dem ersten Endgerät sowie einer weiteren Verbindung zwischen dem anderen Eingang und dem zweiten Endgerät aufgebaut.

Eine CtD-Verbindungsanforderung besteht dabei aus zwei Setup(Verbindungsaufbau)-Nachrichten an das Media-Gateway, welche aus Sicht des Media-Gateways als zwei ankommende TDM-Verbindungen zum Aufbau einer VoIP-Verbindung interpretiert werden. Da beide Setup-Nachrichten zu zeitschlitzgesteuerten Eingängen gehören, welche durch die Datenleitung (TDM-Loop) miteinander verbunden sind, kann nun in einem letzten Schritt ein einfaches Zusammenschalten beider Verbindungen zu einer Übertragungsstrecke vorgenommen werden.

In bevorzugter Weise wird vor dem zweiten Verfahrensschritt ein weiterer Schritt durchgeführt, nachdem die Verfügbarkeit paarweise verbundener Eingänge für Übertragungsstrecken in einem gemeinsamen Zeitschlitz bestimmt wird. Damit wird insbesondere ausgeschlossen, daß eine CtD-Verbindungsanforderung von einem CtD-Server an das Media-Gateway paarweise verbundene Eingänge (in einem gemeinsamen Zeitschlitz miteinander verbundene Ports eines TDM-Trunks) adressiert, welche schon durch bestehende Verbindungen belegt sind. Ist eine entsprechende Verfügbarkeit paarweise verbundener Eingänge vorhanden, werden bei einer CtD-Verbindungsanforderung zwei einander zugehörige Ports bestimmt und die Setup-Nachricht generiert, welche schließlich von dem CtD-Server an das Media-Gateway übermittelt wird.

In besonders bevorzugter Weise wird die Verfügbarkeit paarweise verbundener Eingänge für Übertragungsstrecken durch zeittaktgesteuerte Abfrage des Media-Gateways bestimmt. Dies kann z. B. so geschehen, daß der CtD-Server auf eine Anmeldung des Media-Gateways wartet, danach HEARTBEAT-Nachrichten (regelmäßige Nachrichten) sendet und Tabellen über die Verfügbarkeit der einzelnen Eingänge (TDM-Ports) pflegt.

Vorteile hinsichtlich zeitkritischer Bestimmung der Verfügbarkeit paarweise verbundener Eingänge entstehen dadurch, daß Verfügbarkeitsdaten für Übertragungsstrecken durch Abfragen einer Datenbank vorgenommen werden, in welcher diese gespeichert sind. Damit wird Rechnerleistung vom Media-Gateway auf diese Datenbank verlagert und das Media-Gateway entsprechend entlastet.

Ein Kerngedanke der erfindungsgemäßen Anordnung besteht darin, ein Media-Gateway, welches mit einem IP-Netz verbunden ist und über eine komplette Protokollfunktionalität, insbesondere eines H.323-Protokolls, verfügt, nunmehr so auszubilden, daß über einen mit diesem Media-Gateway kommunizierenden CtD-Server eine CtD-Verbindungsanforderung realisiert werden kann. Dazu werden wenigstens zwei Eingänge für Übertragungsstrecken des Media-Gateways durch eine Datenleitung miteinander verbunden.

Durch diese neuartige Kombination bereits vorhandener Netzkomponenten, insbesondere eines VoIP-Media-Gateways, und vergleichsweise einfach zu realisierender neuer Komponenten, wie des CtD-Servers, kann damit das Feature "Click-to-Dial" bereitgestellt werden, welches mit anderen Lösungsansätzen nur mit erheblich mehr Aufwand zu realisieren ist. Der CtD-Server erfordert auch keinerlei spezielle Hardware (SS7-Karten, Switching Networks o. ä.), wobei die Anbindung an das IP-Netz über eine Standard Ethernet 10baseT-Karte erfolgen kann. Alle benötigten Softwarekomponenten lassen sich auf einem handelsüblichen PC unter Verwendung von Public Domain Software realisieren.

Vorteilhafte Weiterbildungen des erfindungsgemäßen Verfahrens und der Anordnung zur Durchführung des Verfahrens sind in den Unteransprüchen 2 bis 4 bzw. 6 bis 11 angegeben.

Ein besonderer Vorteil entsteht dadurch, daß die Ansteuerung des hier verwendeten Media-Gateways auf dem SLAP (Signaling Lane Application Protocol) basiert, worüber Call Control-Nachrichten signalisiert werden, welche einem bestimmten Zeitschlitz der an das Media-Gateway angeschlossenen TDM-Trunks zugeordnet sind. Der CtD-Server stellt bei der Generierung der CtD-Verbindungsanforderung sicher, daß die Setup-Nachrichten zu TDM-Zeitschlitzen gehören, welche durch die TDM-Loop miteinander verbunden sind, wobei er nur ein rudimentäres SLAP-Protokoll beherrschen muß. Grundsätzlich ist deshalb die Entwicklung neuer Protokollsoftware für die Kommunikation zwischen CtD-Server und Media-Gateway nicht notwendig.

Bevorzugt wird auf dem CtD-Server eine Web-Applikation zur Verfügung gestellt, über deren Interface ein Teilnehmer seine CtD-Verbindungsanforderung auslösen kann. Da entsprechende Web-Server zur Bereitstellung von Web-Applikationen im Hause von Unternehmungen, welche e-Commerce-Strategien umsetzen, schon vorhanden sind, kann ein solcher Web-Server auch als CtD-Server eingesetzt werden. Von besonderem Vorteil ist dabei, wenn die Web-Applikation zur Signalübertragung direkt mit der SLAP-Protokollapplikation kommuniziert. Damit werden aufwendige Konvertierungsschritte bei der Umsetzung einer CtD-Verbindungsanforderung vermieden und gleichzeitig auf Standard-Protokollfunktionalität zurückgegriffen.

Vorteile entstehen weiterhin dadurch, daß in einer Datenbankapplikation aktuelle Verfügbarkeitsdaten paarweise verbundener Eingänge für Übertragungsstrecken in einem gemeinsamen Zeitschlitz gespeichert sind. Diese Verfügbarkeitsdaten könnten z. B. durch eine zeittaktgesteuerte Abfrage von miteinander verbundenen Eingängen in einem gemeinsamen Zeitschlitz am Media-Gateway (miteinander verbundene TDM-Ports) abgefragt und in der Datenbankapplikation aktualisiert werden. Damit sind zu jedem Zeitpunkt aktuelle Verfügbarkeitsdaten abrufbar, auf welche bei der Generierung der CtD-Verbindungsanforderung ohne zusätzliche Inanspruchnahme der Rechnerleistung des Media-Gateways zurückgegriffen werden kann. Zudem ist es möglich, alle aufgebauten Verbindungen (zu Vergebührungszwecken) in dieser Datenbank zu protokollieren.

Von Vorteil ist weiterhin, wenn die Web-Applikation, die SLAP-Protokollapplikation und die Datenbankapplikation auf verschiedenen miteinander vernetzten Servern ablaufen, um im Sinne einer Lastverteilung im Netz eine ausgewogene Auslastung der verschiedenen Rechner (Web-Server, Protokoll-Server, Datenbank-Server, Media-Gateway) insbesondere bei hohem Telekommunikationsaufkommen durch eine Aufteilung der benötigten Rechenleistung auf die jeweiligen Prozessoren zu erzielen. Durch die Trennung der Web- und Datenbankapplikation von der SLAP-Applikation kann der Netzbetreiber die grafische Benutzeroberfläche und die Gebührennachverarbeitung zudem nach Belieben ändern und an seine Bedürfnisse anpassen.

Bevorzugt wird die Signalisierung auf den Übertragungsstrekken auf Basis eines standardisierten Protokolls, insbesondere des H.323-Protokolls vorgenommen. H.323 ist ein global akzeptierter Standard für Audio/Video/Datenkommunikation. Er beschreibt im speziellen, wie Multimediakommunikation zwischen Nutzerterminals, Netzwerkkomponenten und zugeordneten und weiteren Diensten in lokalen und Weitbereichs-Protokoll (LAN und WAN-IP-Protokoll) Netzwerken abläuft. Insbesondere dann, wenn das im erfindungsgemäßen Verfahren und in der zugehörigen Anordnung verwendete Media-Gateway eine komplette H.323-Protokollfunktionalität beinhaltet, wird damit eine Konvertierung von zu übermitteltenden Daten ohne qualitative bzw. zeitliche Einschränkungen möglich.

Das hier beschriebene erfindungsgemäße Verfahren und die Anordnung zur Durchführung des Verfahrens sind insbesondere dann von Vorteil, wenn ein Netzbetreiber bereits "Voice over IP", basierend auf Basis des SURPASS hiG700 VoIP Media-Gateways unter Verwendung des SLAP-Protokolls, anbietet. Durch einfaches Umstecken der Eingänge am Media-Gateway, also dem Verbinden von Ports eines TDM-Trunks im gleichen Zeitschlitz durch eine Datenleitung (DSP-Loop), und den Einsatz der CtD-Serversoftware läßt sich das "Click-to-Dial"-Feature sofort und ohne zusätzliche Hardware realisieren.

Die Erfindung wird im folgenden anhand eines Ausführungsbeispieles näher erläutert.

Gezeigt ist ein Kommunikationsnetzwerk mit einem Media-Gateway 100 des Typs SURPASS hiG700 VoIP, dessen Eingänge 110, 110' über eine Datenleitung 120 paarweise miteinander verbunden sind. Das Media-Gateway 100 ist in der Lage, Verbindungen in ein digital vermitteltes IP-Netz aufzubauen, wozu die Eingänge 110, 110' auf Seiten dieses Netzes mit DSP-Karten (Digital Signaling Processing-Karten), insbesondere HiPer DSP-Karten) auf Seiten dieses Netzes ausgerüstet sind, an welche zu der üblicherweise leitungsvermittelten Netzwerkseite TDM-Trunks (Time Devision Multiplex-Kartenschrank) angeschlossen sind, deren Ports schließlich über die Datenleitungen 120 paarweise und im gleichen Zeitschlitz miteinander verbunden sind.

Über einen CtD-Server 130, welcher mit dem Media-Gateway 100 über eine Netzwerkverbindung 140 kommuniziert, wird eine CtD-Verbindungsanforderung an das Media-Gateway 100 übermittelt, welche paarweise über die Datenleitung 120 miteinander verbundene Eingänge 110, 110' (TDM-Loop) im gleichen Zeitschlitz zum Aufbau und Zusammenschalten von Verbindungen nutzt.

Das Media-Gateway 100 selbst behandelt die eingehende CtD-Verbindungsaufforderung so, als wenn zwei aus dem leitungsvermittelten Netzwerk ankommende TDM-Verbindungen über "Voice-over-IP", in dem hier gezeigten Ausführungsbeispiel über die Übertragungsstrecken 141, 141', an ein weiteres Media-Gateway 150 aufzubauen wären. An diesem werden schließlich Verbindungen im leitungsvermittelten Netzwerk von den Eingängen 111, 111' über Switches 160, 160' (Leitungsweichen) zu den adressierten Endgeräten 170, 170', welche hier herkömmliche analoge Telefone sind, aufgebaut. Durch den TDM-Loop am Media-Gateway 100 werden die Übertragungsstrecken 141, 141' im IP-Netz dauerhaft durchgeschaltet und synchronisiert, wodurch nun beide angeforderten Verbindungen zu den Teilnehmern mit den Endgeräten 170, 170' zusammengeschaltet werden können.

Die CtD-Verbindungsaufforderung kann dabei grundsätzlich, wie hier dargestellt, von einem Internet-Rechner 180, z. B. von einem Laptop, über das Internet 142 an den CtD-Server 130 übermittelt werden. In diesem speziellen Ausführungsbeispiel steht auch die Web-Applikation, welche mit dem SLAP-Protokoll zusammenwirkt, welches zur Übermittlung der CtD-Verbindungsanforderung an das Media-Gateway 100 über die Netzwerkverbindung 140 erforderlich ist, auf dem CtD-Server 130 zur Verfügung.

Es ist auch die Einrichtung einer Datenbankapplikation auf dem CtD-Server 130 vorgesehen, welche nicht nur die aktuellen Verfügbarkeitsdaten paarweise miteinander verbundener Eingänge 110, 110' am Media-Gateway 100 speichert, sondern auch Verbindungsdaten zu Vergebührungszwecken protokolliert. Die Verfügbarkeitsdaten können z. B. über eine zeittaktgesteuerte Abfrage des Media-Gateways 100 durch den CtD-Server 130 erfragt werden.

In diesem Ausführungsbeispiel ist weiterhin ein Gatekeeper 190 vorgesehen, welcher mit dem Media-Gateway 100 und dem weiteren Media-Gateway 150 über Übertragungsstrecken 143, 143' in Verbindung steht. Der Einsatz eines solchen Gatekeepers ist optional. Wenn er aber, wie hier, vorhanden ist, übernimmt er Funktionen wie das Bandbreitenmanagement, die Autorisierung und Authentisierung von Gateways und Terminals oder die Übersetzung zwischen Netzwerkadressen und E.164-konformen Rufnummern. Dies ist auch im vorliegenden Ausführungsbeispiel der Fall, bei dem nicht alle Eingänge 110, 110' am Media-Gateway 100 einen TDM-Loop aufweisen müssen. Nicht durch eine Datenleitung 120 verbundene Eingänge 110, 110' können damit durchaus noch für Leitungsanschlüsse aus einem leitungsvermittelten SCN(Switched Circuit Network)-Netzwerk zur Verfügung stehen. Damit kann in der beschriebenen Netzwerkkonfiguration, bei dem ein Netzbetreiber bereits "Voice over IP" auf Basis des hiG700 VoIP-Media-Gateways und dem SLAP-Protokoll anbietet, durch einfaches Umstecken der TDM-Trunks (DSP-Loop) an einem Media-Gateway zusammen mit dem Einsatz einer CtD-Serversoftware das "Click-to-Dial"-Feature sofort und ohne zusätzliche Hardware realisiert werden.

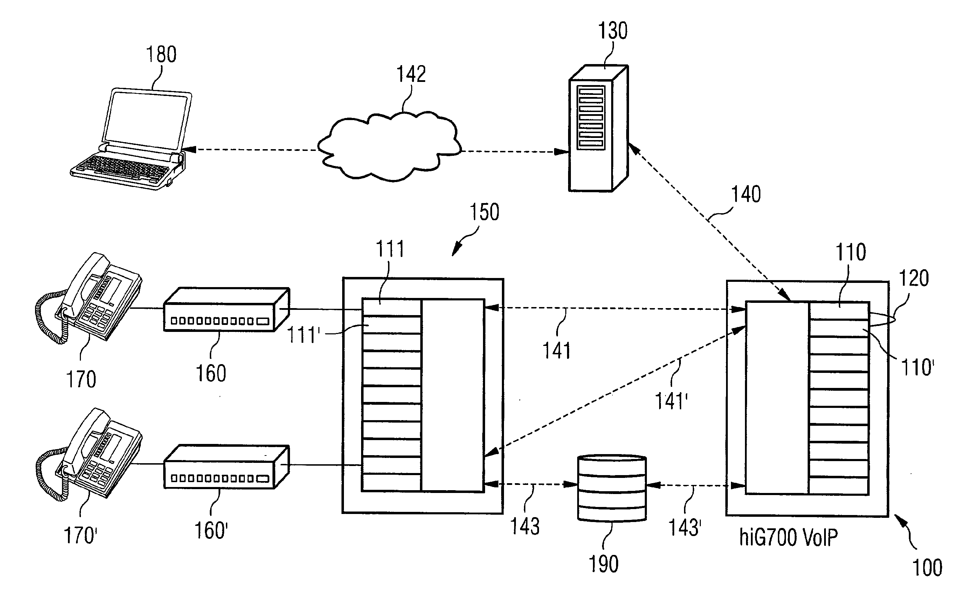

An dieser Stelle sei darauf hingewiesen, daß alle oben beschriebenen Teile für sich alleine gesehen und in jeder Kombination, insbesondere die in der Zeichnung dargestellten Details als erfindungswesentlich beansprucht werden. Abänderungen hiervon sind dem Fachmann geläufig.

## Patentansprüche

1. Verfahren zur Vermittlung einer Verbindung zwischen einem ersten und zweiten Endgerät (170, 170') eines Kommunikationsnetzes, wobei die Vermittlung auf Anforderung von außerhalb dieses Kommunikationsnetzes erfolgt, mit folgenden Schritten:
a) Verbinden zweier zeitschlitzgesteuerter Eingänge (110, 110') für Übertragungsstrecken (141, 141') eines Media-Gateways (100) durch eine Datenleitung (120);
b) Senden einer CtD-Verbindungsanforderung von einem CtD-Server (130) an das Media-Gateway (100), welche die Nutzung der miteinander verbundenen Eingänge (110, 110') zur Übertragung von Signalen in einem gemeinsamen Zeitschlitz bewirkt;
c) Aufbauen einer Verbindung zwischen dem einen Eingang (110) und dem ersten Endgerät (170), sowie einer Verbindung zwischen dem anderen Eingang (110') und dem zweiten Endgerät (170'); und
d) Zusammenschalten beider Verbindungen zu einer Übertragungsstrecke.

2. Verfahren nach Anspruch 1,
**dadurch gekennzeichnet,**
**dass** vor dem Verfahrensschritt b) der folgende weitere Schritt durchgeführt wird:
a1) Bestimmen der Verfügbarkeit paarweise verbundener Eingänge (110, 110') für Übertragungsstrecken (141, 141') in einem gemeinsamen Zeitschlitz.

3. Verfahren nach Anspruch 2,
**dadurch gekennzeichnet,**
**dass** die Verfügbarkeit paarweise verbundener Eingänge (110, 110') für Übertragungsstrecken (141, 141') durch zeittaktgesteuerte Abfrage des Media-Gateways (100) bestimmt wird.

4. Verfahren nach Anspruch 2 oder 3,
**dadurch gekennzeichnet,**
**dass** die Verfügbarkeit paarweise verbundener Eingänge (110, 110') für Übertragungsstrecken (141, 141') durch Abfragen von Verfügbarkeitsdaten bestimmt wird, welche in einer Datenbank gespeichert sind.

5. Anordnung zur Durchführung des Verfahrens nach einem der vorhergehenden Ansprüche,
mit einem Media-Gateway (100), welches mit einem IP-Netz verbunden ist und über eine komplette Protokollfunktionalität, insbesondere eines H.323-Protokolls, verfügt, **gekennzeichnet durch**
einen CtD-Server (130), welcher mit dem Media-Gateway (100) kommuniziert, wobei wenigstens zwei Eingänge (110, 110') für Übertragungsstrecken (141, 141') des Media-Gateways (100) **durch** eine Datenleitung (120) miteinander verbunden sind.

6. Anordnung nach Anspruch 5,
**dadurch gekennzeichnet,**
**dass** der CtD-Server (130) über eine SLAP-Protokollapplikation mit dem Media-Gateway (100) kommuniziert.

7. Anordnung nach Anspruch 5 oder 6,
**dadurch gekennzeichnet,**
**dass** der CtD-Server (130) eine Web-Applikation zur Verfügung stellt, über deren Interface ein Teilnehmer seine CtD-Verbindungsanforderung auslösen kann.

8. Anordnung nach Anspruch 7,
**dadurch gekennzeichnet,**
**dass** die Web-Applikation zur Signalübertragung direkt mit der SLAP-Protokollapplikation kommuniziert.

9. Anordnung nach einem der Ansprüche 5 bis 8,
**gekennzeichnet durch**
eine Datenbankapplikation, in welcher aktuelle Verfügbarkeitsdaten paarweise verbundener Eingänge (110, 110') für Übertragungsstrecken (141, 141') in einem gemeinsamen Zeitschlitz am Media-Gateway (100) gespeichert sind.

10. Anordnung nach Anspruch 9,
**dadurch gekennzeichnet,**
**dass** die Web-Applikation, die SLAP-Protokollapplikation und die Datenbankapplikation auf verschiedenen miteinander vernetzten Servern ablaufen.

11. Anordnung nach einem der Ansprüche 5 bis 10,
**dadurch gekennzeichnet,**
**dass** die Signalisierung auf den Übertragungsstrecken (141, 141') auf Basis eines standardisierten Protokolls, insbesondere des H.323-Protokolls, abläuft.

12. Verwendung eines Media-Gateways (100), insbesondere eines SURPASS hiG700 VoIP-Media-Gateways, zum Vermitteln von Verbindungen beim Verfahren nach einem der Ansprüche 1 bis 4.
